# EUROPÄISCHE PATENTSCHRIFT

(11) **EP 1 530 530 B1**
(45) Veröffentlichungstag und Bekanntmachung des Hinweises auf die Patenterteilung: **08.11.2006**
(21) Anmeldenummer: 03793715.8
(22) Anmeldetag: 11.08.2003
(51) Int. Cl.: B60T 13/26, B60T 13/68, B60T 15/02, B60T 15/20

(54) **ELEKTRONISCHES BREMSSYSTEM, INSBESONDERE FÜR NUTZFATHRZEUGANHÄNGER**
ELECTRONIC BRAKE SYSTEM, PARTICULARLY FOR COMMERCIAL VEHICLE TRAILERS
SYSTEME DE FREINAGE ELECTRONIQUE, EN PARTICULIER POUR UNE REMORQUE DE VEHICULE UTILITAIRE

(30) Priorität: 12.08.2002 DE 10236920
(43) Veröffentlichungstag der Anmeldung: 18.05.2005
(73) Patentinhaber: KNORR-BREMSE SYSTEME FÜR NUTZFAHRZEUGE GMBH, 80809 München (DE)
(72) Erfinder: RÖTHER, Friedbert, 74389 Cleebronn (DE); BRENNER, Dirk, 70597 Stuttgart (DE); WERNER, Kai, 71706 Markgröningen (DE); JUDITH, Martin, 74321 Bietigheim-Bissingen (DE)
(74) Vertreter: Schönmann, Kurt
(86) Internationale Anmeldenummer: PCT/EP2003/008882
(87) Internationale Veröffentlichungsnummer: WO 2004/022400

(56) Entgegenhaltungen:
- EP-A- 0 307 579
- DE-A- 10 120 318
- DE-A- 19 902 225

## Beschreibung

Die vorliegende Erfindung betrifft ein elektronisches Bremssystem, insbesondere für Nutzfahrzeuganhänger mit mindestens einem pneumatisch vorgesteuerten Anhängersteuermodul zur Bremsdruckbeaufschlagung mindestens eines zugeordneten pneumatischen Bremszylinders nach Maßgabe eines von einem Fußbremsmodul vorgegebenen Bremssignals, das zum einen als durch eine elektronische Steuereinheit modifiziertes elektrisches Signal und zum anderen auch als direktes pneumatisches Signal zur Realisierung einer Sicherheitsfunktion vorliegt, wobei das elektrische Signal zur Ansteuerung einer Einlass-/Auslassventilanordnung für die Erzeugung eines Steuerdrucks auf einen ersten Steuerkolben des vorgesteuerten Anhängersteuermoduls vorgesehen ist, und das pneumatische Signal zur Erzeugung eines Steuerdrucks auf einen zweiten Steuerkolben des vorgesteuerten Anhängersteuermoduls vorgesehen ist, wobei der zweite Steuerkolben gleichläufig benachbart zum ersten Steuerkolben im Anhängersteuermodul angeordnet und durch Mittel zum Rückhalten in einer Ruheposition beeinflusst ist.

Ein derartiges elektronisches Bremssystem (EBS) steuert über eine meist zentrale Steuereinheit (ECU) mittels elektropneumatischer Steuermodule (EPM) die Druckluftbremsanlage eines Fahrzeuges. Eine oder mehrere vom Steuermodul ausgehende Bremsleitungen stehen gewöhnlich zu diesem Zwecke mit einem Bremszylinder am Fahrzeugrad in Verbindung, der die zum Bremsen des Fahrzeugrades benötigte Bremskraft für eine hieran angeschlossene Scheiben- oder Trommelbremse erzeugt. Die elektropneumatischen Steuermodule für die Ansteuerung des Anhängers werden als Anhängersteuermodule (TCM) bezeichnet. Die elektrisch angesteuerten Anhängersteuermodule sind seitens des Zugfahrzeugs untergebracht; seitens des Anhängers korrespondieren diese mit passiv vorgesteuerten Anhängersteuerventilen. Die Vorgabe eines Bremsdrucksollwertes für die elektropneumatischen Steuermodule und Anhängersteuermodule erfolgt im Zugfahrzeug durch das vom Fahrer zu betätigende Fußbremsmodul (FBM). Das Fußbremsmodul gibt das entsprechende Bremssignal sowohl elektrisch als auch pneumatisch aus. Das pneumatische Bremssignal wird dabei zur Sicherheit im Falle eines Ausfalls der elektrischen Ansteuerung für den sogenannten Backupbetrieb genutzt.

Aus der EP 0 547 407 A1 geht ein im Rahmen eines elektronischen Bremssystems eingesetztes Anhängersteuermodul hervor. Das Anhängersteuermodul verfügt über den vorstehend beschriebenen elektrischen und pneumatischen Steuerkreis. Da das im Fußbremsmodul erzeugte elektrische Bremssignal vor dem pneumatischen Bremssignal den Vorrang haben soll, wird bei Vorliegen des elektrischen Bremssignals das pneumatische Bremssignal mittels eines der Steuerkammer des Anhängersteuermoduls vorgeordneten Backupventils zurückgehalten. Fällt jedoch störungsbedingt das elektrische Bremssignal aus, so wird durch Umschalten des Backupventils das pneumatische Bremssignal in der Steuerkammer des Anhängersteuermoduls wirksam. Die Druckluftbremsanlage behält daher bei einem derartigen Störfall ihre Funktionsfähigkeit. Herkömmliche Druckluftbremsanlagen von Nutzfahrzeugen besitzen zwei voneinander getrennte Steuerkreise einer Betriebsbremsanlage, von denen ein Steuerkreis der Vorderachse und ein Steuerkreis der Hinterachse des Fahrzeugs zugeordnet ist. Zugfahrzeuge mit Anhängern sind darüber hinaus mit einem Anhängersteuermodul zur Betätigung einer Anhängerbremsanlage ausgestattet. Das Anhängersteuermodul weist gewöhnlich zwei Steuerkammern auf, an die jeweils ein Steuerkreis der Betriebsbremsanlage im Sinne einer Parallelredundanz angeschlossen ist. Eine weitere Steuerkammer des Anhängersteuermoduls ist hier an eine Feststellbremsanlage des Zugfahrzeuges angeschlossen. Die Anhängerbremsanlage ist durch Druckeinsteuerung in die Steuerkammern des Anhängersteuermoduls betätigbar, welche mit den standardisierten Steuerkreisen I und II der Betriebsbremsanlage verbunden sind. Außerdem ist das Anhängersteuermodul durch Druckabfall in der der Feststellbremsanlage zugeordneten Steuerkammer im Bremssinn bremsbar.

Aus der DE 42 26 697 C1 geht ein elektronisches Bremssystem mit einem gattungsgemäßen Anhängersteuermodul hervor, wobei das Anhängersteuermodul genau zwei Steuerkammern aufweist. In einer der Steuerkammern ist ein erster Steuerkolben untergebracht, der über das elektrische Signal mittels einer elektropneumatischen Vorsteuerventilanordnung ansteuerbar ist. In der zweiten Steuerkammer ist ein zweiter Steuerkolben angeordnet, welcher über das pneumatische Signal rein pneumatisch ansteuerbar ist. Beiden Steuerkolben ist eine Doppelsitzventilmechanik zugeordnet, die ein Einlassventil sowie ein Auslassventil zur Be- oder Entlüftung einer Bremsleitung umfasst. Beide Steuerkolben sind gleichläufig benachbart auf der einen Seite der Doppelsitzventilmechanik vorgesehen. An beiden Steuerkolben befinden sich voneinander getrennte Reaktionsflächen. Nur der pneumatisch angetriebene Steuerkolben weist eine über eine Voreileinrichtung beaufschlagbare Reaktionsfläche auf, um ihn in der Ruheposition zurückzuhalten, so dass bei einer im Normalfall erfolgenden Bremsung mittels des elektrischen Signals eine präzise Bremskraftregelung gewährleistbar ist. Bei Ausfall des elektrischen Signals und damit des elektrischen Steuerkreises ist der zweite, pneumatische Steuerkreis für die Steuerdruckbeaufschlagung in die zweite Steuerkammer des Anhängersteuermoduls wirksam. Während also der erste Steuerkreis bei der Ansteuerung der Anhängerbremsanlage der mit hoher Funktionssicherheit alleinwirkende ist, wird im Anhängersteuermodul eine zweite Steuerkammer vorgehalten, deren Inanspruchnahme nur in einem wenig wahrscheinlichen Störfall benötigt wird.

Aus der DE 199 02 225 A 1 ist ebenfalls ein Anhängersteuermodul mit einem ersten Steuerkolben für einen elektrischen Steuerkreis und einen zweiten Steuerkolben für einen pneumatischen Steuerkreis bekannt. In der ersten Steuerkammer wird über die elektropneumatische Einlass-/Auslassventilanordnung eine Rückhaltekraft auf den zweiten Steuerkolben erzeugt, welche gegen dessen die Doppelsitzventilmechanik betätigende Bewegung wirkt. Dadurch kann der modulierte Bremsdruck im vorrangigen ersten Steuerkreis auf einen niedrigen Wert eingeregelt werden, ohne dass der nachrangige zweite Steuerkreis anspricht. Eine solche Reduzierung des Bremsdrucks ist gerade bei Bremssystemen, welche eine Koppelkraftregelung beinhalten, regelungstechnisch von Vorteil. Bedingt durch die zusätzliche Rückhaltung kann der Anhänger mit recht geringem Steuerdruck abgebremst werden.

Ein Problem dieser Lösung besteht jedoch darin, dass aufgrund der Rückhaltung des zweiten Steuerkolbens ein Unterbremsen bei Ausfall des ersten Steuerkreises des Anhängers auftreten kann. Im Extremfall könnte dieses Verhalten zu einem gefährlichen Fahrzustand durch Einklappen des Anhängers - insbesondere bei einer Kurvenfahrt - relativ zum Zugfahrzeug führen. Zwar ist somit ein Rückhalt des zweiten Steuerkolbens aus regelungstechnischen Gründen im Normalfall gewünscht; im Störfall verursacht dies jedoch den vorstehend dargelegten Gefahrenzustand.

Es ist daher die Aufgabe der vorliegenden Erfindung ein gattungsgemäßes elektronisches Bremssystem dahingehend weiter zu verbessern, dass mit dem Anhängersteuermodul eine Koppelkraftregelung zwischen dem Zugfahrzeug und dem Anhänger möglich ist und gleichzeitig ein Unterbremsen des Anhängers mit einfachen Mitteln vermieden wird.

Die Aufgabe wird ausgehend von einem elektronischen Bremssystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass das von dem Fußbremsmodul ausgehende pneumatische Signal gesteuert durch ein normal-offenes, elektropneumatisches Backupventil mit vorgeschalteter Drossel auch parallel und gedrosselt zu dem ersten Steuerkolben geführt ist, um eine bevorzugte Steuerdruckversorgung des zweiten Steuerkolbens im Falle eines Sicherheitsbetriebs im Störfall zu gewährleisten.

Der Vorteil der erfindungsgemäßen Lösung liegt insbesondere darin, dass auch der erste Steuerkolben zur Betätigung der Doppelventilsitzanordnung des Anhängerbremsmoduls genutzt werden kann, wobei die Drossel im Falle eines Defekts im betreffenden Bremskreis III verhindert, dass der zwischen dem Fußbremsmodul und der zweiten Steuerkammer verlaufende Bremskreis bevorzugt mit Steuerdruck versorgt wird. Dieser sicherheitstechnisch kritische Bremskreis ist damit gegen einen Ausfall durch Druckabfall geschützt. Die Drossel sorgt nämlich dafür, dass weniger Druckluft aus diesem Bremskreis ausströmen kann, als vom Kompressor nachgefördert wird. Regelungstechnisch ist damit eine Kennlinienklappung über das Backupventil verbunden, so dass auch im Fall einer Bremsung mit dem elektrischen Signal im Normalbetrieb ein Rückhalt des zweiten Steuerkolbens zur besseren Regelgüte realisiert werden kann. Durch das Zwischenschalten des Backupventils wird sichergestellt, dass sich das Anhängersteuermodul im Sicherheitsbetrieb wie ein konventionelles Anhängersteuermodul verhält, da der Backupdruck nur um den Ansprechdruck des Anhängersteuermoduls vermindert zum Anhänger ausgesteuert wird.

Vorzugsweise ist das elektropneumatische Backupventil als 2/2-Wegesitzventil ausgebildet. Ventile derselben Bauart kommen vorzugsweise auch zur Bildung der Einlass-/Auslassventilanordnung zur Anwendung. Diese Ventilart hat sich für den vorliegenden Einsatzzweck als besonders robust und zuverlässig erwiesen.

Von besonderem Vorteil ist es, wenn die Drossel direkt in das Anhängersteuermodul in Form einer Strömungskanalverengung integriert ist. Somit entfallen zusätzliche Mittel zur Bildung der Drossel. Es ist jedoch auch denkbar, dass die Drossel als separates Bauteil an irgendeiner Stelle des Abschnitts der Backupdruckleitung zwischen dem Fußbremsmodul und dem Backupventil eingefügt ist. Die Drossel kann darüber hinaus auch als einstellbare Drossel mit variierbaren Strömungsquerschnitt ausgeführt werden, um Feinabstimmungen zu ermöglichen. Daneben kann die Drossel auch durch einen entsprechend dünnen lichten Durchmesser des Abschnitts der Backupdruckleitung zwischen dem Fußbremsmodul und dem Backupventil auf besonders einfache Weise gebildet werden.

Gemäß einer weiteren die Erfindung verbessernden Maßnahme können die Mittel zum Rückhalten des zweiten Steuerkolbens in der Ruheposition als unterschiedliche Wirkflächen zu beiden Seiten des Steuerkolbens in Verbindung mit unterschiedlichen Steuerdrücken geometrisch ausgebildet sein.

Vorzugsweise sind die Einlass-/Austassventilanordnung, das Backupventil sowie die Drossel in einem gemeinsamen Ventilgehäuse des vorgesteuerten Anhängersteuermoduls untergebracht. Das gemeinsame Ventilgehäuse gewährleistet neben einem Schutz vor äußeren Umwelteinflüssen auch kurze pneumatische Leitungswege, die regelungstechnisch von Vorteil sind.

Weitere die Erfindung verbessernde Maßnahmen werden nachstehend gemeinsam mit der Beschreibung eines bevorzugten Ausführungsbeispiels anhand der Figuren näher dargestellt. Es zeigt:
- Figur 1: eine schematische Darstellung eines elektronischen Bremssystems mit einem Anhängersteuermodul, und
- Figur 2: eine graphische Darstellung der Kennlinie des Bremsdrucks über dem Steuerdruck.

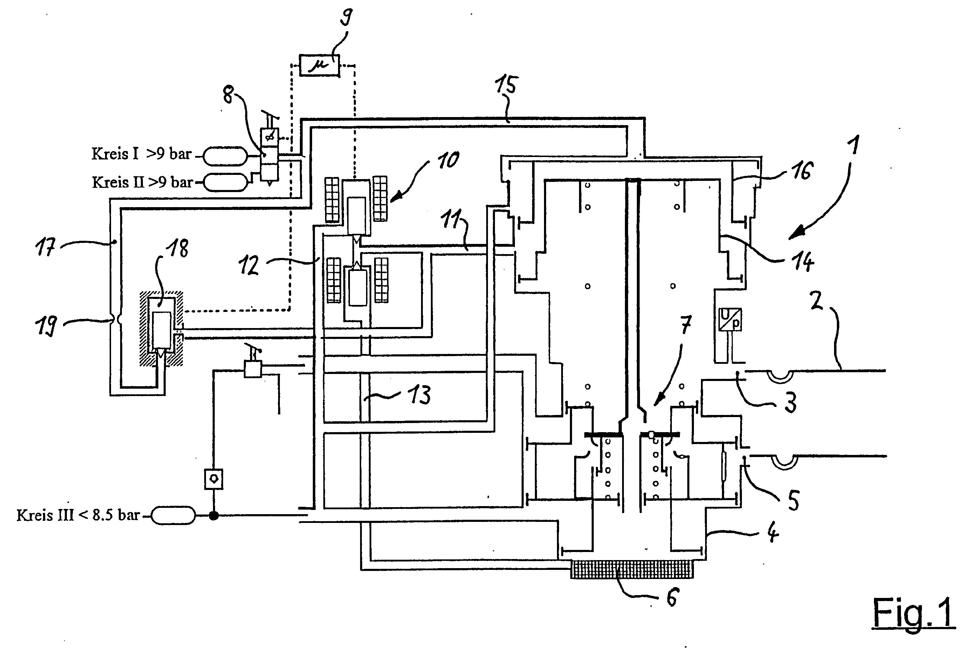

Gemäß Figur 1 besitzt ein Anhängersteuermodul 1 eines Nutzfahrzeugs zur Druckmittelbeaufschlagung einer zugeordneten pneumatischen Bremsleitung 2, die zum - nicht weiter dargestellten - Anhänger führt, einen Bremsleitungsanschluss 3. Der Bremsleitungsanschluss 3 ist an einem Gehäuse 4 des Anhängersteuermoduls 1 platziert. Am Gehäuse 4 ist weiterhin ein Speisedruckanschluss 5 für die Anhängerversorgung sowie eine nach Außen führende Entlüftungsöffnung 6 platziert.

Das Anhängersteuermodul 1 verfügt weiterhin über eine pneumatische Vorsteuerung, mit welcher eine Ventilsitzmechanik 7 zur Be- oder Entlüftung der Bremsleitung 2 betätigt wird. Da Aufbau und Funktionsweise der Ventilsitzmechanik 7 allgemein bekannt sind, soll an dieser Stelle hierauf nicht weiter eingegangen werden. Die Vorsteuerung des Anhängersteuermoduls 1 erfolgt nach Maßgabe eines Fußbremsmoduls 8, welches das Bremssignal vorgibt. Das Bremsmodul 8 erzeugt ein elektrisches Signal als Bremssignal, das über eine nachgeschaltete elektronische Steuereinheit 9 unter anderem im Sinne einer Koppelkraftregelung modifiziert wird und zur Ansteuerung einer Einlass-/Auslassventilanordnung 10 dient. Die Einlass-/Auslassventilanordnung 10 besteht aus zwei 2/2-Wegesitzventilen, die wechselseitig angesteuert eine Steuerdruckleitung 11 entweder mit einer Speisedruckleitung 12 oder einer Entlüftungsleitung 13 verbindet. Hierüber wird die Beaufschlagung eines ersten Steuerkolbens 14 im Bereich der Vorsteuerung des Anhängersteuermoduls 1 bewirkt.

Weiterhin erzeugt das Fußbremsmodul 8 auch ein Bremssignal in Form eines pneumatischen Signals, das über eine Backupleitung 15 zur unmittelbaren Beaufschlagung eines zweiten Steuerkolbens 16 vorgesehen ist. Der zweite Steuerkolben 16 ist innerhalb der Vorsteuerung des Anhängersteuermoduls 1 benachbart zum ersten Steuerkolben 14 angeordnet. Die geometrischen Durchmesserverhältnisse sowie beidseitig je angreifenden Drücke sind so konzipiert, dass der zweite Steuerkolben 16 im normalen Bremsbetrieb, das heißt beim Bremsen mit dem elektrischen Signal, in seiner oberen Anschlagstellung als Ruheposition zurückgehalten wird, damit im Normalbetrieb Überlagerungserscheinungen vermieden werden, so dass die Regelgüte gewährleistet ist.

Das von dem Fußbremsmodul 8 ausgehende pneumatische Signal wird über einen von der Backupleitung 15 abzweigenden Leitungsabschnitt 17 einem Backupventil 18 zugeführt. Das Backupventil 18 ist als 2/2-Wegesitzventil ausgeführt und verhält sich normal-offen. Das Backupventil 18 ist im normalen Bremsbetrieb, das heißt bei einer Bremsung mit dem elektrischen Signal, durch eine entsprechende, von der elektronischen Steuereinheit 9 veranlassten Bestromung geschlossen. Weiterhin ist eine Drossel 19 in den Leitungsabschnitt 17 integriert. Somit wird das von dem Fußbremsmodul 8 ausgehende pneumatische Signal gesteuert durch das normal-offene Backupventil 18 mit der vorgeschalteten Drossel 19 auch parallel und gedrosselt zu dem ersten Kolben 14 über die Steuerdruckleitung 11 geführt. Hierdurch wird eine bevorzugte Steuerdruckversorgung des zweiten Steuerkolbens 16 über die ungedrosselte Backupleitung 15 gewährleistet, was im Falle eines Sicherheitsbetriebs, das heißt bei Ausfall des elektrischen Signals ein Bremsen ohne Druckrückhalt sicherstellt.

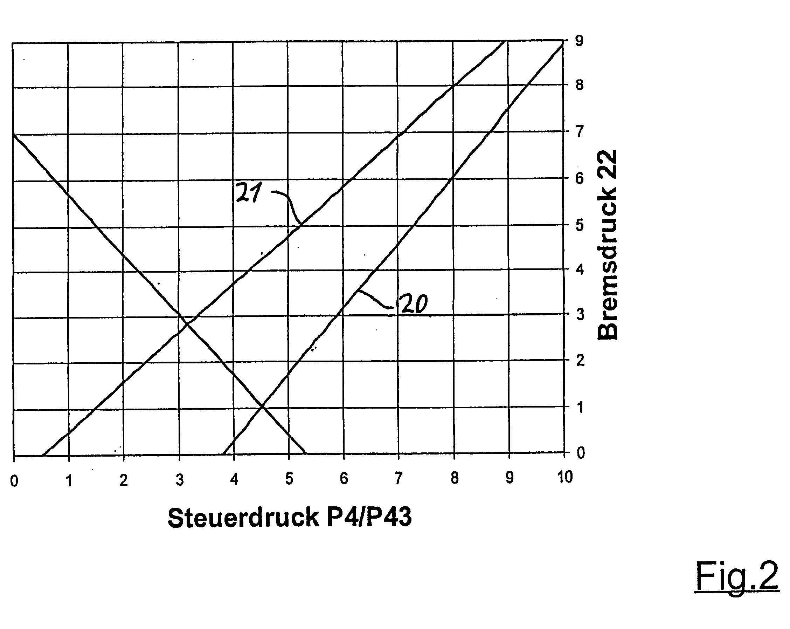

Die Figur 2 macht die Auswirkungen der erfindungsgemäß ausgebildeten Vorsteuerung auf den Bremsdruck deutlich. Der Graph 20 stellt den Bremsdruckverlauf in Abhängigkeit vom Steuerdruck in der Backupleitung 15 dar. Der benachbarte Graph 21 verdeutlicht den Bremsdruckverlauf in Abhängigkeit vom Steuerdruck in der Steuerdruckleitung 11. Bei offenem Backupventil 18 wird der Druck von der Steuerkammer 15 über die Drossel 19 in die elektrische Steuerkammer 14 geleitet, welches eine Kennlinienklappung von 20 nach 21 bewirkt.

### Bezugszeichenliste

- **1**: Anhängersteuermodul
- **2**: Bremsleitung
- **3**: Bremsleitungsanschluss
- **4**: Gehäuse
- **5**: Speisedruckanschluss
- **6**: Entlüftungsöffnung
- **7**: Ventilsitzmechanik
- **8**: Fußbremsmodul
- **9**: Steuereinheit
- **10**: Einlass-/Auslassventilanordnung
- **11**: Steuerdruckleitung
- **12**: Speisedruckleitung
- **13**: Entlüftungsleitung
- **14**: erster Steuerkolben
- **15**: Backupleitung
- **16**: zweiter Steuerkolben
- **17**: Leitungsabschnitt
- **18**: Backupventil
- **19**: Drossel
- **20**: Graph
- **21**: Graph

## Patentansprüche

1. Elektronisches Bremssystem, insbesondere für Nutzfahrzeuganhänger, mit mindestens einem pneumatisch vorgesteuerten Anhängersteuermodul (1) zur Bremsdruckbeaufschlagung mindestens einer zugeordneten pneumatischen Bremsleitung (2) nach Maßgabe eines von einem Fußbremsmodul (8) vorgegebenen Bremssignals, das zum einen als durch eine elektronische Steuereinheit (9) modifiziertes elektrisches Signal und zum anderen auch als direktes pneumatisches Signal zur Realisierung eines Sicherheitsbetriebs vorliegt, wobei das elektrische Signal zur Ansteuerung einer Einlass-/Auslassventilanordnung (10) zur Erzeugung eines Steuerdrucks auf einen ersten Steuerkolben (14) des vorgesteuerten Anhängersteuermoduls (1) vorgesehen ist, und das pneumatische Signal zur Erzeugung eines Steuerdrucks auf einen zweiten Steuerkolben (16) des vorgesteuerten Anhängersteuermoduls (1) vorgesehen ist, wobei der zweite Steuerkolben (16) gleichläufig benachbart zum ersten Steuerkolben (14) im Anhängersteuermodul (1) angeordnet und durch Mittel zum Rückhalten in einer Ruheposition beeinflusst ist,
**dadurch gekennzeichnet, dass** das von dem Fußbremsmodul (8) ausgehende pneumatische Signal gesteuert durch ein normal-offenes, elektropneumatisches Backupventil (18) mit vorgeschalteter Drossel (19) auch parallel und gedrosselt zu dem ersten Steuerkolben (14) geführt ist, um eine bevorzugte Steuerdruckversorgung des zweiten Steuerkolbens (16) im Falle eines Sicherheitsbetriebs im Störfall zu gewährleisten.

2. Elektronisches Bremssystem nach Anspruch 1,
**dadurch gekennzeichnet, dass** das elektropneumatische Backupventil (18) als 2/2-Wege Sitzventil ausgebildet ist.

3. Elektronisches Bremssystem nach Anspruch 1 oder 2,
**dadurch gekennzeichnet, dass** die Drossel (19) direkt in das Anhängersteuermodul (1) in Form einer Strömungskanalverengung integriert ist.

4. Elektronisches Bremssystem nach Anspruch 1 oder 2,
**dadurch gekennzeichnet, dass** die Drossel (19) durch einen entsprechend dünnen lichten Durchmesser des Abschnitts der Backupleitung (17) zwischen dem Fußbremsmodul (8) und dem Backupventil (18) gebildet ist.

5. Elektronisches Bremssystem nach Anspruch 1 oder 2,
**dadurch gekennzeichnet, dass** die Drossel (19) als separates Bauteil an irgendeiner Stelle des Abschnitts der Backupdruckleitung (17) zwischen dem Fußbremsmodul (8) und dem Backupventil (18) eingefügt ist.

6. Elektronisches Bremssystem nach Anspruch 1,
**dadurch gekennzeichnet, dass** die Mittel zum Rückhalten des zweiten Steuerkolbens (16) in der Ruheposition als unterschiedliche Wirkflächen zu beiden Seiten des Steuerkolbens (16) in Verbindung mit unterschiedlichen Drücken ausgebildet sind.

7. Elektronisches Bremssystem nach Anspruch 1 oder 2,
**dadurch gekennzeichnet, dass** zumindest die Einlass- /Auslassventilanordnung (10), das Backupventil (18) sowie die Drossel (19) in einem gemeinsamen Gehäuse (4) des vorgesteuerten Anhängersteuermoduls (1) untergebracht sind.

8. Elektronisches Bremssystem nach einem der vorstehenden Ansprüche,
**dadurch gekennzeichnet, dass** die Drossel (19) nach Art einer verstellbaren Drossel ausgebildet ist.

## Claims

1. Electronic brake system, in particular for utility vehicle trailers, comprising at least one pneumatically pilot-operated trailer controller module (1) for applying brake pressure on at least one associated pneumatic brake line (2) in correspondence with a brake signal predetermined by a service brake module (8), which is present, on the one hand, as an electric signal modified by an electronic controller (9) and, on the other hand, also as a direct pneumatic signal for implementing a safety mode, with said electric signal being provided for controlling an inlet/outlet valve arrangement (10) for generating an actuating pressure acting upon a first control piston (14) of said pilot-operated trailer controller module (1), and with said pneumatic signal being provided for generating a actuating pressure acting upon a second control piston (16) of said pilot-operated trailer controller module (1), wherein said second control piston (16) is arranged with the same extension adjacent to said first control piston (14) in said trailer controller module (1) and is influenced in its rest position by retaining means, **characterised in that** the pneumatic signal output from said service brake module (8) is controlled by a normally open electro-pneumatic backup valve (18) with an upstream restrictor (19) and passed in parallel, in a restricted form, to said first control piston (14) in order to ensure a preferred pilot pressure supply of said second control piston (16) in the event of a safety mode when trouble has occurred.

2. Electronic brake system according to Claim 1,
**characterised in that** said electro-pneumatic backup valve (18) is configured as 2/2-way seat valve.

3. Electronic brake system according to Claim 1 or 2,
**characterised in that** said restrictor (19) is integrated into said trailer controller module (1) in the form of a flow passage restriction.

4. Electronic brake system according to Claim 1 or 2,
**characterised in that** said restrictor (19) is formed by an appropriately thin clear diameter of the section of the backup line (17) between said service brake module (8) and said backup valve (18).

5. Electronic brake system according to Claim 1 or 2,
**characterised in that** said restrictor (19) is inserted as separate component at any location whatsoever along the section of said backup line (17) between said service brake module (8) and said backup valve (18).

6. Electronic brake system according to Claim 1,
**characterised in that** said means for retaining said second control piston (16) in the rest position are configured in the form of different effective areas on both sides of said control piston (16) in combination with different pressure levels.

7. Electronic brake system according to Claim 1 or 2,
**characterised in that** at least said inlet/outlet valve arrangement (10), said backup valve (18) as well as said restrictor (19) are accommodated in a common housing (4) of said pilot-operated trailer controller module (1).

8. Electronic brake system according to any of the preceding Claims,
**characterised in that** said restrictor (19) is configured in the manner of an adjustable restrictor.

## Revendications

1. Système de freinage électronique, en particulier pour des remorques de véhicule utilitaire, comprenant au moins un module de réglage automatique de la remorque (1), commandé par soupape pilote pneumatique afin d'influencer au moins un conduit pneumatique de freinage affecté (2) par une pression de freinage en correspondance avec un signal de freinage prédéterminé par un module de frein de service (8), qui est appliqué, d'un côté, sous forme d'un signal électrique modifié par un bloc de réglage électronique (9) et, d'autre côté, aussi sous forme d'un signal pneumatique directe à réaliser un régime de sécurité, audit signal électrique étant prévu pour le réglage d'un système de soupapes d'entrée/de sortie (10) à engendre une pression de commande agissant sur un premier piston pilote (14) dudit module de réglage automatique de la remorque (1), commandé par soupape pilote, et audit signal pneumatique étant formé afin d'engendre une pression de commande agissant sur un deuxième piston pilote (16) dudit module de réglage automatique de la remorque (1), commandé par soupape pilote, dans lequel ledit deuxième piston pilote (16) est disposé à la même étendue et au voisinage dudit premier piston pilote (14) dans ledit module de réglage automatique de la remorque (1), en étant influencé en sa position de repos par des moyens de retenue,
**caractérisé en ce que** ledit signal pneumatique sortant dudit module de frein de service (8) est réglé par une soupape électropneumatique de secours (18), qui est normalement ouvert, à une soupape d'étranglement (19) en amont, et qu'il est transféré en parallèle, sous forme étranglé, audit premier piston pilote (14) afin d'assurer une alimentation en pression pilote préférée dudit deuxième piston pilote (16) au cas d'un régime de sécurité aux conditions de la défaillance.

2. Système de freinage électronique selon la revendication 1,
**caractérisé en ce que** ladite soupape électropneumatique de secours (18) est configuré sous forme d'une soupape à siège à 2/2 voies.

3. Système de freinage électronique selon la revendication 1 ou 2,
**caractérisé en ce que** ladite soupape d'étranglement (19) est intégrée dans ledit module de réglage automatique de la remorque (1) sous forme d'un étranglement du passage d'écoulement.

4. Système de freinage électronique selon la revendication 1 ou 2,
**caractérisé en ce que** ladite soupape d'étranglement (19) est formée par un diamètre intérieur de petite épaisseur appropriée du segment de la conduite de secours (17) entre ledit module de frein de service (8) et ladite soupape de secours (18).

5. Système de freinage électronique selon la revendication 1 ou 2,
**caractérisé en ce que** ladite soupape d'étranglement (19) est insérée sous forme d'un élément de construction séparé à tout endroit quelconque le long du segment de la conduite de secours (17) entre ledit module de frein de service (8) et ladite soupape de secours (18).

6. Système de freinage électronique selon la revendication 1,
**caractérisé en ce que** lesdits moyens de retenue dudit deuxième piston pilote (16) en position de repos sont configurés sous forme de surfaces actives différentes des deux côtés dudit piston pilote (16) en combinaison avec des pressions différentes.

7. Système de freinage électronique selon la revendication 1 ou 2,
**caractérisé en ce qu'**au moins ledit système de soupapes d'entrée/de sortie (10), ladite soupape de secours (18) ainsi que ladite soupape d'étranglement (19) sont renfermés dans un carter commun (4) dudit module de réglage automatique de la remorque (1), commandé par soupape pilote pneumatique.

8. Système de freinage électronique selon une quelconque des revendications précédentes,
**caractérisé en ce que** ladite soupape d'étranglement (19) est configuré de la manière d'un étranglement ajustable.
